# EUROPÄISCHE PATENTSCHRIFT

(11) **EP 3 672 413 B1**
(45) Veröffentlichungstag und Bekanntmachung des Hinweises auf die Patenterteilung: **16.12.2020**
(21) Anmeldenummer: 18758588.0
(22) Anmeldetag: 20.08.2018
(51) Int. Cl.: A22C 21/00

(54) **HEBEVORRICHTUNG, EINGERICHTET ZUM HEBEN VON IN REIHE HÄNGEND GEFÖRDERTEN GEFLÜGELBEINEN**
LIFTING DEVICE FOR LIFTING POULTRY LEGS CONVEYED IN A HANGING POSITION
DISPOSITIF DE LEVAGE DESTINÉ À LEVER DES JARRETS DE VOLAILLES TRANSPORTÉS DE MANIERE SUSPENDUE

(30) Priorität: 21.08.2017 DE 102017119059
(43) Veröffentlichungstag der Anmeldung: 01.07.2020
(73) Patentinhaber: Linco Food Systems A/S, 8380 Trige (DK)
(72) Erfinder: EBBERS, Hermanus Godefridus Wilhelmus, 6986 BH Angerlo (NL)
(74) Vertreter: Stork Bamberger Patentanwälte PartmbB
(86) Internationale Anmeldenummer: PCT/EP2018/072438
(87) Internationale Veröffentlichungsnummer: WO 2019/038231

(56) Entgegenhaltungen:
- EP-A1- 0 391 467
- WO-A1-2015/117668
- US-A- 3 380 113
- US-A- 3 537 127
- US-B1- 6 450 872

## Beschreibung

Die Erfindung betrifft eine Hebevorrichtung, eingerichtet zum Heben von in Reihe hängend geförderten Geflügelbeinen, umfassend eine Fördereinrichtung mit entlang eines Förderstrangs in gerader Förderlinie und Förderrichtung bewegbaren Geflügelträgern, wobei jeder Geflügelträger ein an dem Förderstrang aufgehängtes Trägeraufhängeteil und ein Fußtragteil aufweist, an dem eine Fußeinhängeeinrichtung ausgebildet ist, in die wenigstens ein Geflügelbein mittels des Fußgelenkkopfes des Geflügelbeins zur hängenden Förderung einhängbar ist, eine Geflügelbein-Hebeeinrichtung, die eine Geflügelbein-Positioniereinrichtung mit wenigstens einem, einer Geflügelbein-Hebestrecke zugeordneten Positionierelement aufweist, das außerhalb der Fußeinhängeeinrichtungen unter Gewichtsentlastung des Geflügelträgers derart in Eingriff mit den geförderten Geflügelbeinen gelangt, dass dadurch die geförderten Geflügelbeine und damit deren Fußgelenkköpfe in der Geflügelbein-Hebestrecke in gehobene Fußgelenkkopf-Positionen hebbar sind und infolgedessen gehoben werden.

Gattungsgemäße Hebevorrichtungen sind aus WO 2015/117668 A1 bekannt. Jedes lateral oder axial geförderte Geflügelbein wird aus hängender Ausgangsposition in eine Referenzposition gehoben, in der es in einer Bein-Halte- und Führungseinrichtung weiter gefördert und insbesondere bearbeitet wird. Ein Heben des Geflügelbeins in die gehobene Referenzposition erfolgt dadurch, dass Positionierelemente einer Geflügelbein-Hebeeinrichtung an dem Geflügelbein angreifen, um es an der Stelle des Kniegelenks in der Referenzposition in einen Halte- und Führungsspalt der Bein-Halte-Führungseinrichtung einzufädeln. Einzelheiten solcher Hebevorrichtungen gehen aus WO 2015/117668 A1 hervor, auf die Bezug genommen wird. Wesentlich ist, dass beim Heben des Geflügelbeins auch der Fußgelenkkopf des Geflügelbeins gehoben wird. Solange das Geflügelbein nicht gehoben wird, hängt der Fußgelenkkopf in der Fußeinhängeeinrichtung, zum Beispiel einem U-förmigen Trägerbügel des Geflügelträgers in normaler Hängeposition. Die Fußeinhängeeinrichtung trägt dann das Geflügelbein mit seinem gesamten Gewicht. Wird jedoch das Geflügelbein gehoben, so geht die Gewichtslast auf die Positionierelemente der Geflügelbein-Hebeeinrichtung und, wenn das Geflügelbein dort weiter gefördert wird, auf die Bein-Halte- und Führungseinrichtung über. Wie in WO 2015/117668 A1 näher beschrieben, muss der Fußgelenkkopf beim Wechsel der Lasttragung in der Fußeinhängeeinrichtung nach oben bewegbar, insbesondere in dem Trägerbügel nach oben gleitbewegbar ausweichen können. In der Praxis kommt es vor, dass diese Ausweichbewegung des Fußgelenkkopfes nach oben gestört oder sogar verhindert ist. Dies resultiert daraus, dass die Fördereinrichtungen mit einheitlichen oder standardisierten Fußeinhängeeinrichtungen ausgestattet sind, die an sich ausgelegt sind, um die Fußgelenkköpfe möglichst klemmfrei aufzunehmen, und daraus, dass Größe und/oder Form der Fußgelenkköpfe bereits infolge geringfügiger anatomischer Unterschieden schwanken, mit der Folge, dass einige Fußgelencköpfe in den Fußeinhängeeinrichtungen verklemmen. Fußgelenkköpfe der betroffenen Geflügelbeine lassen sich dann nicht ausreichend frei heben, so dass es insbesondere beim Heben zu Fehlpositionierungen und insbesondere zu Betriebsstörung und damit gegebenenfalls zum Betriebsausfall der Geflügelbein-Hebeeinrichtung kommt.

Der Erfindung liegt das Ziel zugrunde, beim Heben von geförderten Geflügelbeinen in einer Geflügelbein-Hebestrecke sowie, falls erforderlich, auch beim Beibehalten von Hebepositionen eine ausreichend freie und leichtgängige Höhenbewegbarkeit von beim Fördern in Geflügelträgern eingehängten Fußgelenkköpfen der Geflügelbeine sicherzustellen, um Fehlpositionierungen und Betriebsausfall zu vermeiden.

In Verbindung mit den Merkmalen der eingangs genannten Hebevorrichtung wird das Ziel erreicht durch eine Hebevorrichtung gemäß Anspruch 1 mit einer Träger-Hebeeinrichtung, umfassend die Geflügelträger sowie eine im Bereich der Geflügelbein-Hebeeinrichtung angeordnete Träger-Führungseinrichtung, wobei jeder Geflügelträger das Fußtragteil zur Höhenverstellung zwischen einer festen unteren Hängehöhe und darüber liegenden Hängehöhen frei höhenbewegbar an dem Trägeraufhängeteil lagert und wobei die Träger-Führungseinrichtung ein dynamisch bewegbares Hebe-Führungsglied, das im Bereich der Geflügelbein-Hebeeinrichtung mit einer wenigstens einem Abschnitt der Geflügelbein-Hebestrecke zugeordneten Führungsstrecke angeordnet ist, sowie eine Führungs-Lagereinrichtung aufweist, die das Hebe-Führungsglied im Zusammenwirken mit der durch das Heben der Geflügelbeine bewirkten Gewichtsentlastung der Geflügelträger durch Absenken und Anheben dynamisch höhenbewegbar lagert, wobei das Hebe-Führungsglied zum Eingriff mit dem Fußtragteil angeordnet ist, derart, dass jede Fußeinhängeeinrichtung entlang der Führungsstrecke mittels des Fußtragteils in Hängehöhen gehoben wird, die mit den in der Geflügelbein-Hebeeinrichtung gehobenen Fußgelenkkopf-Positionen korrespondieren.

Mit den erfindungsgemäßen Maßnahmen erreicht man, dass der Fußgelenkkopf beim Übergang der Traglast von dem Geflügelträger auf Tragteile wie Positionierelemente und/oder Führungselemente der Geflügelbein-Hebeeinrichtung während des Anhebens des Geflügelbeins und/oder in gehobener Position ausreichend frei sowie besonders leichtgängig zusammen mit dem Fußtragteil des Geflügelträgers nach oben bewegbar bzw. ausweichbar ist. Auch beim Fixieren oder Klemmen des Fußgelenkkopfes in der Fußeinhängeeinrichtung wird ungestörte Förderung sowie insbesondere eine qualitativ unbeeinträchtigte Bearbeitung sichergestellt. Eine besondere Maßnahme besteht darin, dass, in Zuordnung der Führungsstrecke des Hebe-Führungsglieds zu wenigstens einem Abschnitt der Geflügelbein-Hebestrecke, mittels der dynamischen Lagerung des Hebe-Führungsglieds der genannte Lastwechsel genutzt wird, um das geführte Heben der Fußtragteile in die Hängehöhen der Fußeinhängeeinrichtungen, die mit den in der Geflügelbein-Hebestrecke insbesondere sukzessiv herbeigeführten Fußgelenkkopf-Hebepositionen korrespondieren, in Abhängigkeit von Hebezustand des oder der Geflügelbeine an einem Geflügelträger zu begünstigen und zu unterstützen und damit leichtgängig zu machen. Die durch Gewichtsentlastung oder Neutralisierung bewirkte dynamische Führungsbewegung mit Freiheitsgrad zum Absenken und Anheben des Hebe-Führungsglieds passt die Hängehöhen auch bei anatomischen Schwankungen und/oder unterschiedlichen Oberschenkel- oder Unterschenkellängen aufeinanderfolgender zu hebender bzw. zu positionierender Geflügelbeine an.

Vorteilhaft ist das Fußtragteil an dem Trägeraufhängeteil mittels eines Schiebelagers derart gelagert, dass die Höhenverstellung in gerader Linie teleskopartig eingerichtet ist. Man erreicht, dass die Höhenverstellung des Trägertragteils, die dem Führungsglied folgt, ohne Schwenkbewegung eingerichtet ist.

Die Führungsstrecke des dynamisch bewegbaren Hebe-Führungsglieds weist vorteilhaft eine Führungslänge auf, die maximal gleich dem Förderabstand zwischen zwei aufeinanderfolgenden Geflügelträgern ist, wobei sie an einer Förderposition des Geflügelträgers endet, an der am Ende der Geflügelbein-Hebestrecke eine definierte gehobene Fußgelenkkopf-Position erreicht ist. Man erreicht nicht nur ein von einander unabhängiges Heben aufeinanderfolgender Fußtragteile, sondern auch ein besonders präzises Heben des Fußgelenkkopfes an der definierten Stelle, die insbesondere als Referenz-Hebeposition zum weiteren Fördern und Bearbeiten des Geflügelbeins mittels einer Bein-Halte- und Führungseinrichtung nutzbar ist.

Eine optimale Anpassung der Führungsstrecke des dynamisch gelagerten Hebe-Führungslieds an die Geflügel-Hebestrecke lässt sich dadurch einrichten, dass das Hebe-Führungsglied durch einen ansteigenden Anstiegs-Führungsabschnitt sowie einen anschließenden Horizontal-Führungsabschnitt gebildet ist, wobei der Anstiegs-Führungsabschnitt im Vergleich mit dem Horizontal-Führungsabschnitt eine kleine Führungslänge aufweist, die zweckmäßig nur einem Eingangsbereich der Geflügelbein-Hebestrecke der Geflügelbein-Hebeeinrichtung zugeordnet ist. Der Anstiegs-Führungsabschnitt und der Horizontal-Führungsabschnitt sind vorteilhaft fest, zum Beispiel als Bestandteile eines einstückigen Führungskörpers, miteinander verbunden. Es lässt sich insbesondere ein zeitgleiches Anheben und Absenken des Hebe-Führungsglieds in eine unterste Hebeposition bewirken. Insbesondere für diese Gestaltung des dynamischen Hebe-Führungsglieds wird die Führungs-Lagereinrichtung derart eingerichtet, dass das dynamische Hebe-Führungsglied parallel zur geraden Förderlinie höhenbewegbar ist.

Eine maximale Hebehöhe des Hebe-Führungsglieds, insbesondere unter Berücksichtigung eines Bereichs, den ein Fußgelenkkopf oberhalb einer Referenz-Höhenposition am Ende der Geflügelbein-Hebestrecke einnehmen kann, lässt sich durch einen zugeordneten Höhenanschlag an der Träger-Führungseinrichtung vorsehen.

Vorteilhaft lagert die Führungs-Lagereinrichtung das Hebe-Führungsglied dynamisch gegen einstellbare Gegen- oder Rückstellkraft, die beim Eingriff des zu hebenden Fußtragteils mit dem Hebe-Führungsglied einer Gewichtskraft entgegenwirkt, die das Hebe-Führungsglied belastet. Mittels der einstellbaren Gegen-/Rückstellkraft, die zum Beispiel mit einem entlang eines Hebels verlagerbaren Gegengewicht einstellbar ist, lässt sich das Absenken und Anheben des Hebe-Führungsglieds besonders einfach, gezielt und wirksam an Gewichtsbereiche oder Gewichtsgruppen von Geflügelbeinen anpassen, und auch anatomischen Unterschieden kann entsprochen werden. Zudem lässt sich die durch Gewichtsentlastung bestimmte Hebeführung an die Art und Weise des insbesondere sukzessiven Anhebens eines Geflügelbeins oder eines Geflügelbein-Paares, zum Beispiel nach Maßgabe einer Geflügelbein-Positioniereinrichtung in der Geflügelbein-Hebestrecke anpassen. Zum Beispiel erfolgt eine Anpassung an einen Beugevorgang, mit dem die Geflügelbeine positioniert und gehoben werden. Insbesondere bestehen unterschiedliche Beugevorgänge darin, dass einerseits das Geflügelbein lateral gefördert wird. Wie in WO 2015/117668 A1 näher beschrieben, ist die Lateralförderung dadurch bestimmt, dass das Geflügelbein während der Förderung mit einer seiner lateralen Seiten vorausläuft bzw. vorausgerichtet ist. Andererseits lässt sich das Geflügelbein zum Beispiel mit Kniescheibe voraus axial fördern. Unter Axialförderung ist zu verstehen, dass das Geflügelbein mit vorauslaufender bzw. vorausgerichteter axialer Beinseite, an der sich die Kniescheibe oder Kniekehle befindet, gefördert wird.

Eine Einstellung der Gegen-/Rückstellkraft besteht darin, dass das Hebe-Führungsglied in einer Träger-Einführungsposition, in der die Fußtragteile in Eingriff mit dem dynamischen Hebe-Führungsglied gelangen, in eine untere Führungsposition bewegbar ist, die sich bei Belastung des dynamischen Hebe-Führungsglieds mit gegenüber der Gegen-/Rückstellkraft größerer Gewichtskraft einstellt. Zur Anpassung an Gewichtsbereiche, Größen- oder Anatomieschwankungen der Geflügelbeine und/oder Gewichtsbeeinflussung durch unterschiedliche Beugevorgänge ist es besonders vorteilhaft, dass das Hebe-Führungsglied in einer Träger-Einführungsposition, in der die Fußtragteile in Eingriff mit dem Hebe-Führungsglied gelangen, durch Einstellung der Rückstellkraft in eine gewünschte gehobene Schwebe-Führungsposition mit Schwebebereich setzbar ist, die sich bei Belastung des Hebe-Führungsglieds mit durch die Rückstellkraft ausgeglichener Gewichtskraft einstellt. Das Wechselspiel zwischen Gewichtsbelastung und Gewichtsentlastung lässt sich nach Bedarf so einstellen, dass das Hebe-Führungsglied beim ersten Eingriff der Fußtragteile oder zu einem späteren Zeitpunkt beim Passieren der Hebe-Führungsstrecke in die Schwebe-Führungsposition gelangt, in der das auf das Fußtragteil wirkende Gewicht ausbalanciert wird. Zum ersten Anheben kann das Hebe-Führungsglied eingangsseitig mit einem Steigungsabschnitt ausgebildet sein. Unter Schwebebereich wird ein Höhenbereich um die neutrale Schwebe-Führungsposition verstanden.

Eine bevorzugte Gestaltung der Träger-Führungseinrichtung besteht darin, dass die Führungs-Lagereinrichtung wenigstens eine Hebe-Schwenklagereinrichtung mit einem durch zwei Seitenhebel bestimmten zweiseitigen Hebel aufweist, der um eine Lagerschwenkachse, die insbesondere zur geraden Förderlinie parallel ist, schwenkbar ist, wobei der erste Seitenhebel das dynamische Hebe-Führungsglied trägt und der zweite Seitenhebel eine Rückstellkraft bewirkendes Gegengewicht trägt.

Vorteilhaft wird an jedem Geflügelträger ein steuerbares Arretierelement angeordnet, das die Höhenverstellung zwischen dem Trägeraufhängeteil und dem Fußtragteil vorzugsweise selbsttätig sperrt, wobei die Träger-Führungseinrichtung der Hebevorrichtung ein Entsperr-Steuerglied aufweist, das mit dem Arretierelement zur Freigabe der Höhenverstellung zwischen dem Trägeraufhängeteil und dem Fußtragteil an einer Förderposition in Eingriff bringbar ist, die einer Einführungsposition der Geflügelbeine in die Träger-Hebeeinrichtung vorausliegt.

Fußeinhängeeinrichtungen von einigen Geflügelträgern können derart, zum Beispiel durch wenigstens einen Bügel gestaltet sein, dass sie beim Heben der Geflügelbeine ein freies Heben wenigstens einiger Fußgelenkköpfe zulassen. Andererseits lassen sich Fußeinhängeeinrichtungen vorsehen, die insbesondere sämtliche Fußgelenkköpfe fixieren, diese also in den Fußeinhängeeinrichtungen festsetzen.

Zweckmäßig ist die Fußeinhängeeinrichtung für die genannte Lateralförderung zum Einhängen von zwei hintereinander zu fördernden, voneinander getrennten, insbesondere im Paar jeweils linken und rechten Geflügelbeinen eines Geflügels ausgebildet. Für die genannte Axialförderung ist die Fußeinhängeeinrichtung zum Einhängen von zwei nebeneinander zu fördernden, voneinander getrennten Geflügelbeinen ausgebildet.

Zweckmäßig weist die Geflügelbein-Hebeeinrichtung eine Bein-Beugeeinrichtung mit wenigstens einem Positionierelement auf, das jedes geförderte Geflügelbein am Kniegelenk beugt und den Fußgelenkkopf in eine gehobene, vorzugsweise definierte Fußgelenkkopf-Position bringt. Eine Gestaltung besteht darin, dass wenigstens ein Förderabschnitt der Geflügelbein-Hebeeinrichtung durch eine Bein-Halte- und Führungseinrichtung mit wenigstens einem Positionierelement gebildet ist, die mittels der Geflügelträger geförderte Geflügelbeine, die insbesondere bereits im Wesentlichen gehoben sind, in einer Referenz-Förderstrecke mit gehobenen Fußgelenkköpfen hält und führt. Sobald ein Geflügelbein nach Erreichen einer bestimmten gehobenen Fußgelenkkopf-Position mittels der Geflügelbein-Hebeeinrichtung nicht mehr gehoben und nicht gehoben gehalten wird, kann ein Lastwechsel auf das Fußtragteil des Geflügelträgers stattfinden, sofern sich das Fußtragteil nicht mehr in Eingriff mit dem dynamischen Hebe-Führungsglied befindet. Das Geflügelbein wird dann normal hängend, das heißt ohne ein Heben des Fußtragteils gefördert.

Zweckmäßig wird vorgesehen, wie bereits dargelegt und in WO 2015/117668 A1 näher beschrieben, dass die Geflügelbein-Hebeeinrichtung eine Bein-Halte- und Führungseinrichtung umfasst, die in eine definierte Position gehobene und mittels der Geflügelträger geförderte Geflügelbeine in einer Referenz-Förderstrecke mit gehobenen Fußgelenkköpfen hält und führt. Vorteilhaft weist die Bein-Halte- und Führungseinrichtung einen Halte- und Führungsspalt auf, in den die Geflügelbeine in vertikaler Ausrichtung mittels ihrer Kniegelenke einhängbar sind. Die Anordnung kann derart sein, dass damit die Fußgelenkköpfe aus einer unteren Position in eine obere Position gehoben werden. Dem Halte- und Führungsspalt kann insbesondere im Fall der Lateralförderung ein Führungs-Referenzrand vorausgehen, der die Geflügelbeine in definierter gehobener Position hält und gegebenenfalls weiter hebt. Die Geflügelbein-Hebeeinrichtung mit der Bein-Halte- und Führungseinrichtung lässt sich derart gestalten, dass die Führungsstrecke des Hebe-Führungsglieds an einer Förderposition des Geflügelträgers endet, die einer Position am Anfang der Referenz-Förderstrecke zugeordnet ist, und dass die Fußtragteile entlang der Referenz-Förderstrecke frei höhenbewegbar an den Trägeraufhängeteilen gelagert sind. Die Fußtragteile stützen sich dann, wenn sie das Hebe-Führungsglied verlassen, an den Fußgelenkköpfen, die klemmend in den Fußeinhängeeinrichtungen sitzen, ab. Die Führung des Geflügelbeins in gewünschter Höhe wird dabei mittels der Bein-Halte- und Führungseinrichtung durchgeführt. Insbesondere wird bei der Lateralförderung der Unterschenkel und bei der Axialförderung der Oberschenkel des Geflügelbeins in definierter Höhe geführt und kann an einer oder mehreren Bearbeitungsstationen zum Fleischabtrennen präzise bearbeitet werden. Die Fußgelencköpfe können in der Bein-Halte- und Führungseinrichtung beim Fördern entlang eines genannten Führungs-Referenzrandes oder des Halte-Führungsspaltes, insbesondere abhängig von schwankenden Längen der Unterschenkel, gehoben werden.

Eine erfindungsgemäße Träger-Führungseinrichtung kann so angeordnet sein, dass die Führungsstrecke des Hebe-Führungsglieds wenigstens teilweise wenigstens einen Abschnitt, vorzugsweise einen Anfangsabschnitt einer Bein-Halte- und Führungseinrichtung, abdeckt.

Eine konstruktionstechnisch besonders vorteilhafte Gestaltung besteht darin, dass das Hebe-Führungsglied durch ein Paar zu einer vertikalen Fördermittenebene symmetrisch ausgebildeter und gelagerter Hebe-Führungsstangen gebildet ist, und dass das Fußtragteil jedes Geflügelträgers ein zum Eingriff mit dem Hebe-Führungsglied auf das Paar der Hebe-Führungsstangen aufsetzbares Träger-Führungselement, zum Beispiel einen zur Förderlinie quer gerichteten Träger-Führungssteg aufweist.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen und Gestaltungen zu verstehen. Insbesondere wird als allgemeines Merkmal ein solches Merkmal bezeichnet und verstanden, das auch isoliert von anderen Merkmalen einer Kombination oder eines Ausführungsbeispiels zu dem erfindungsgemäßen Erfolg der allgemeinen Lehre der Erfindung insbesondere nach dem Hauptanspruch beiträgt.

Es zeigen
- Fig. 1: in Längsansicht eine erfindungsgemäße Hebevorrichtung zum Heben lateral geförderter Geflügelbeine in einer Position in einer Geflügelbein-Hebestrecke sowie in einer gehobenen Bearbeitungsposition in einer Referenz-Förderstrecke,
- Fig. 2: in axonometrischer Ansicht eine Träger-Führungseinrichtung einer erfindungsgemäßen Hebevorrichtung und
- Fig. 3: in der Fig. 1 entsprechender Längsansicht eine erfindungsgemäße Hebevorrichtung mit axial geförderten Geflügelbeinen.

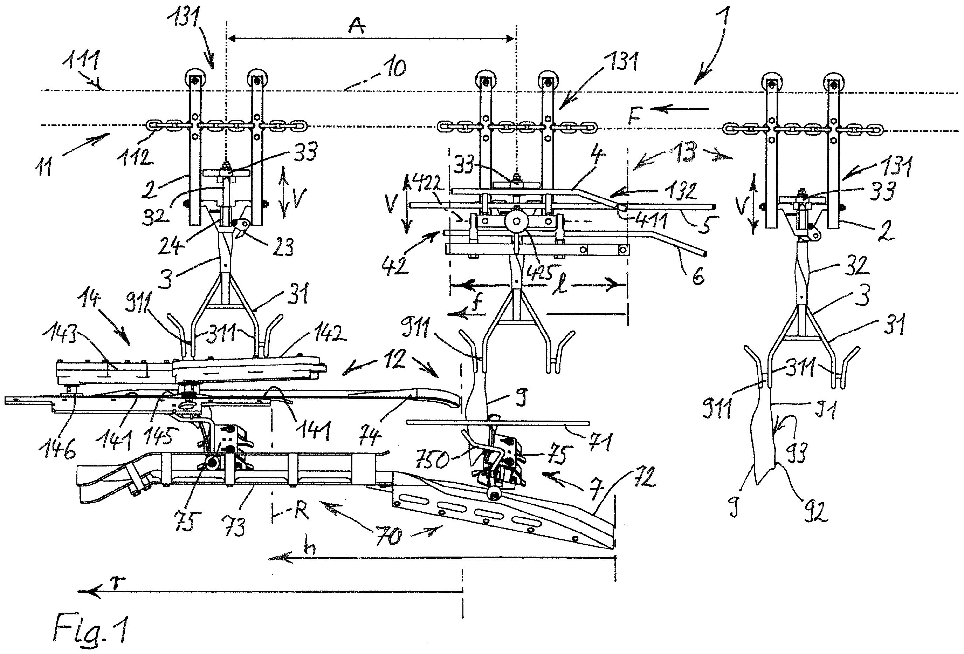

Wie aus Fig. 1 ersichtlich, umfasst eine erfindungsgemäße Hebevorrichtung 1 eine Geflügelbein-Hebeeinrichtung 12 sowie eine Träger-Hebeeinrichtung 13 mit einer Träger-Führungseinrichtung 132, die einer durch einen Abschnitt einer Gesamtförderstrecke bestimmten Geflügelbein-Hebestrecke h der Geflügelbein-Hebeeinrichtung 12 zugeordnet und zum Zusammenwirken mit einem Anheben des die Geflügelbein-Hebestrecke h durchlaufenden Geflügelbeins 9 eingerichtet ist.

Damit wesentliche Teile der Hebevorrichtung 1 und deren Einrichtungen aus der Zeichnung klar ersichtlich sind, werden Gestell-, Rahmen- und Verbindungsteile, an denen Organe, Aggregate, allgemein Bauteile montiert und miteinander verbunden sind, sowie Antriebe, Antriebselemente und dergleichen Elemente nicht oder nicht näher dargestellt.

Die Hebevorrichtung 1 ist mit einer Fördereinrichtung 11 ausgestattet, die entlang einer geraden Förderlinie 10 eine Reihe von Geflügelträgern 131 aufweist, die in einheitlicher Höhe und mit in der Regel einheitlichem Abstand A an einem Förderstrang 111 aufgehängt sind und zum Beispiel mittels einer Förderkette 112 in Förderrichtung F gefördert werden. Es handelt sich um einen typischen Überkopf-Förderer mit im Umlauf geförderten Geflügelträgern 131.

Jeder Geflügelträger 131 weist eine Fußeinhängeeinrichtung 31 auf, die an einem Fußtragteil 3 ausgebildet ist und, in Förderrichtung F nebeneinander im Paar, mit U-förmigen Bügeln 311 geformt ist, wobei in jeden Bügel 311 ein Geflügelbein 9 mit seinem Fußgelenkkopf 911 einhängbar ist, und zwar zur Lateralförderung, das heißt mit einer der beiden lateralen Beinseiten zwischen Beinvorderseite und Beinrückseite voraus. In Fig. 1 ist jeweils nur ein vorauslaufender Trägerbügel 311 des Bügelpaares mit einem linken Geflügelbein bestückt. Der andere Trägerbügel 311 wird üblicherweise mit dem anderen, rechten Geflügelbein eines Geflügels bestückt. Jedes Geflügelbein 9 ist ein vollständig von einem geschlachteten Geflügel abgetrenntes Teil.

Die Geflügelbein-Hebeeinrichtung 12, wie sie aus dem in Bezug genommenen Dokument WO 2015/117668 A1 bekannt ist, umfasst eingangsseitig, d. h. stromaufwärts eine Bein-Beugeeinrichtung 7 und daran anschließend, stromabwärts eine Bein-Halte- und Führungseinrichtung 14. Die Bein-Beugeeinrichtung 7 ist Bestandteil einer Geflügelbein-Positioniereinrichtung 70. Diese weist im Ausführungsbeispiel sich mit der Förderrichtung F erstreckende stationäre Positionierelemente 71 bis 74 sowie mitlaufende Positionierelemente 75 auf. Die mitlaufenden Positionierelemente 75 sind jeweils dem geförderten Geflügelbein 9, mit dem sie mitlaufen, zugeordnet. Ein stromaufwärts angeordnetes Positionierelement 72 ist eine mit der Geflügelbein-Hebestrecke h verlaufende Führungsbahn, mit der jedes mitlaufende Positionierelement 75 angehoben und mit einem Hebearm 750 zu Anlage an den Oberschenkel an der Beinvorderseite des lateral geförderten Geflügelbeins 9 gebracht wird. Dadurch wird das Geflügelbein 9 im Bereich seines Kniegelenks im Zusammenwirken mit den stationären Positionierelementen 71, 72 und am Anfang des Positionierelements 74 gebeugt. Im Verlauf des Beugens des Geflügelbeins 9 wird dieses gehoben, wobei die Kniekehle in einer definierten gehobenen, obere Position gegen das Positionierelement 74 gelangt, das einen sich in Förderrichtung F erstreckenden Führungs-Referenzrand aufweist, an dem das Geflügelbein 9 in eine Höhen-Referenzposition gelangt.

Im Ausführungsbeispiel geht der Führungs-Referenzrand an einer Förderposition R, die das Geflügelbein 9 in der Höhen-Referenzposition passiert, in einen Halte- und Führungsspalt 141 der Bein-Halte- und Führungseinrichtung 14 über. Der Führungs-Referenzrand führt das Geflügelbein 9 in der oberen Position in der Höhe seines Kniegelenks 93 in den Halte- und Führungsspalt 141 ein, wobei das Geflügelbein 9 mit dem Kniegelenk in den Halte- und Führungsspalt 141, vertikal angeordnet, mit nach oben ragendem Unterschenkel eingehängt ist, wie dies in Fig. 1 dargestellt ist. Mittels des in den Halte- und Führungsspalt 141 eingehängten Geflügelbeins 9 befindet sich dessen Kniegelenk 93 an der Beinrückseite in einer Referenzposition an jeder Stelle längs des Halte- und Führungsspalts 141. Wie aus Fig. 1 ersichtlich, lässt sich das Geflügelbein 9 in dieser Referenzposition bearbeiten. Die Bein-Halte- und Führungseinrichtung 14 ist als Bearbeitungseinrichtung zum Bearbeiten des Geflügelbeins 9 eingerichtet. Eine Vorderseiten-Schneidestation 142, die eingangsseitig angeordnet ist, weist ein oberhalb des Halte- und Führungsspalts 141 angeordnetes Schneidmittel 145 in Form eines Kreismessers auf. Eine anschließende Rückseiten-Schneidestation 143 ist mit einem oberhalb des Halte- und Führungsspalts 141 arbeitenden Schneidmittel 146 ausgestattet, das durch ein Kreismesser gebildet ist.

Während eines allgemein sukzessiven Hebens des Geflügelbeins 9 längs der Geflügelbein-Hebestrecke h in der Bein-Beugeeinrichtung 7 und längs einer Referenz-Förderstrecke r, die das Geflügelbein 9 in gehobener Referenzposition durchläuft, ist das Geflügelbein 9 so ausgerichtet, dass sich mit dem Geflügelbein 9 auch dessen Fußgelenkkopf 911 hebt bzw. in gehobener Position befindet und befinden muss, um beim Heben und anschließend in gehobenem Zustand insbesondere zum Bearbeiten eine definierte vertikale Ausrichtung des Geflügelbeins 9 sicherzustellen. Zu diesem Zweck wird erfindungsgemäß die Träger-Hebeeinrichtung 13 mit der Träger-Führungseinrichtung 132 angeordnet und eingerichtet. Das ungehobene Geflügelbein 9 wird, so lange es stromaufwärts vor Erreichen der Geflügelbein-Hebeeinrichtung 12 gefördert wird, mit seinem gesamten Gewicht ausschließlich mittels des Geflügelträgers 131 getragen, wobei der Fußgelenkkopf 911 in vielen Fällen fest, nämlich klemmend oder fixierend, in der Fußhängeeinrichtung 31, im Beispiel in dem Trägerbügel 311 sitzt. Beim Heben des Geflügelbeins 9 in der Geflügelbein-Hebestrecke h geht die Gewichtslast des Geflügelbeins 9 auf das hebende mitlaufende Positionierelement 75 und schließlich auf stationäre Teile wie Stangen und Platten über, die den Führungs-Referenzrand bzw. den Halte- und Führungsspalt 141 bilden.

Die Träger-Führungseinrichtung 132 der Träger-Hebeeinrichtung 13 ist erfindungsgemäß allgemein der Geflügelbein-Hebeeinrichtung 12 nebengeordnet, derart, dass ein Hebe-Führungsglied 4 der Träger-Führungseinrichtung 132 mit einer Führungsstrecke f der Geflügelbein-Hebestrecke h zugeordnet ist und diese in einem Abschnitt bis zum Erreichen der Höhen-Referenzposition überdeckt, wie dies in Fig. 1 dargestellt ist. Wie nachstehend noch im Einzelnen beschrieben wird, ist das Hebe-Führungsglied 4 als dynamisches Hebe-Führungsglied derart eingerichtet, dass es im Wechselspiel mit der Bein-Beugeeinrichtung 7 der Geflügelbein-Positioniereinrichtung 70 beim Heben des Geflügelbeins 9 arbeitet.

Bestandteil der Träger-Hebeeinrichtung 13 sind auch die Geflügelträger 131, wobei jeder Geflügelträger 131 durch ein in gleicher Höhe an der Fördereinrichtung 11, zum Beispiel rollbewegbar an dem Förderstrang 111, aufgehängtes Trägeraufhängeteil 2 und ein daran vertikal, vorzugsweise allgemein teleskopartig gelagertes Fußtragteil 3 gebildet ist. Im Ausführungsbeispiel ist das Fußtragteil 3 mittels eines Schiebelagers 24 an dem Trägeraufhängeteil 2 derart gelagert, dass das Fußtragteil 3 zur Höhenverstellung in gerader Richtung V oberhalb einer unteren Anschlag- oder Sperrposition frei höhenbewegbar ist. An dem Fußtragteil 3 ist die Fußeinhängeeinrichtung 31 ausgebildet, die sich während des normalen Transports des Geflügelbeins 9, das heißt in der Hängeposition, in der das Geflügelbein 9 den Geflügelträger 131 vor Erreichen der Geflügelbein-Hebeeinrichtung 12 mit seinem vollen Gewicht belastet, in der unteren Anschlag-/Sperrposition befindet. Weiterhin ist an dem Fußtragteil 3, im Ausführungsbeispiel an dem oberen Ende eines Schafts 32, ein Träger-Führungselement 33 angeordnet, das, wie in Fig. 1 im Bereich der Führungsstrecke f bzw. der Geflügelbein-Hebestrecke h dargestellt, zum gleitenden Eingriff mit dem dynamischen Hebe-Führungsglied 4 in Förderrichtung F vorgesehen ist, um das Fußtragteil 3 während des Eingriffs in der Höhe zu verstellen.

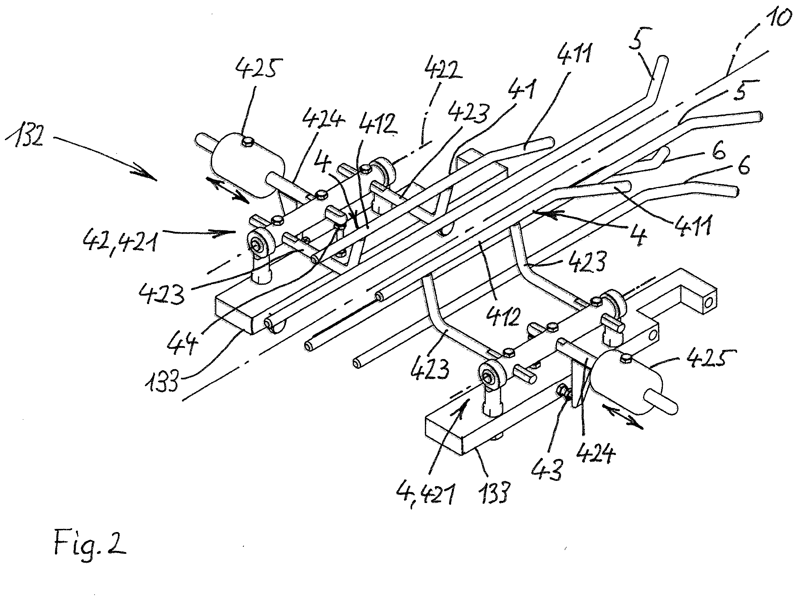

Die Träger-Führungseinrichtung 132, wie sie in Fig. 1 in Anordnung mit der Bein-Beugeeinrichtung 7 der Geflügelbein-Positioniereinrichtung 70 dargestellt ist, geht im Einzelnen aus Fig. 2 hervor.

Die Träger-Führungseinrichtung 132 weist das dynamische Hebe-Führungsglied 4 auf, das zu einer gedachten vertikalen, sich in der geraden Förderlinie 10 erstreckenden Fördermittenebene mit sämtlichen Teilen symmetrisch ausgebildet ist. Diese gemäß Ausführungsbeispiel vorgesehene Träger-Führungseinrichtung 132 wird daher anhand einer Symmetriehälfte beschrieben, wobei die zu den Bezugszeichen gehörenden Teile stets in der symmetrischen Doppelanordnung zu verstehen sind. Es ist allgemein möglich, die Teile der Träger-Führungseinrichtung ohne Doppelanordnung zu gestalten und vorzusehen.

Eine Führungs-Lagereinrichtung 42 ist an stationären Gestellteilen 133, zum Beispiel an Tragbalken oder -streben des nicht dargestellten Vorrichtungsgestells, stationär angeordnet. Die Führungs-Lagereinrichtung 42 ist eine Hebe-Schwenklagereinrichtung 421 mit einer zur Förderlinie 10 parallelen Lagerschwenkachse 422. Um diese ist ein zweiseitiger Hebel schwenkbar gelagert. Ein erster Seitenhebel 423, gebildet durch parallele Gestängeteile, trägt das dynamische Hebe-Führungsglied 4 in Form einer sich entsprechend der Förderlinie 10 erstreckenden Hebe-Führungsstange 41. Der zweite Seitenhebel 424 trägt als Rückstellgewicht ein Gegengewicht 425, das dem Gewicht, mit dem das Hebe-Führungsglied 4 und damit der erste Seitenhebel 423 belastet wird, entgegenwirkt. Mittels des zweiseitigen Hebels ist die Hebe-Führungsstange 41 zwischen zwei Höhenpositionen, nämlich einer unteren Anschlagposition 44 und einer oberen Anschlagposition 43 parallel zur Förderlinie 10 mit Zwischenhöhen hin und her schwenkbar.

Weiterhin sind an der Träger-Führungseinrichtung 132 an den Gestellteilen 133 angebrachte stationäre Führungen angeordnet, nämlich, in genannter Symmetrieanordnung ein Förder-Führungsglied 5 in Form einer horizontalen Führungsstange zur Gleitführung sowie, gleichfalls in Symmetrieanordnung, ein Entsperr-Steuerglied 6 in Form einer Stange, wobei sich die Stangen mit der Förderlinie 10 erstrecken. Die Anbringung des Förder-Führungsglieds 5 sowie des Entsperr-Steuerglieds 6 an dem Gestellteil 133 ist in Fig. 1 nicht, jedoch in Fig. 2 dargestellt.

Eine zur Führungsstrecke f gehörende Führungslänge I des Hebe-Führungsglieds 4 ist vorteilhaft allgemein in zwei Abschnitte unterteilt, nämlich in einen ansteigenden Anstiegs-Führungsabschnitt 411 sowie einen daran festen, anschließenden Horizontal-Führungsabschnitt 412, die vorteilhaft, wie im Ausführungsbeispiel, einstückige Bestandteile der Hebe-Führungsstange 41 sind. Der Anstiegs-Führungsabschnitt 411 weist im Vergleich mit dem Horizontal-Führungsabschnitt 412 nur eine kleine, einem Anfangsbereich der Geflügelbein-Hebestrecke h zugeordnete Führungslänge auf. Vorteilhaft ist die Gestaltung allgemein derart, dass, wie in Fig. 1 und 2 dargestellt, der Tiefenanschlag 44 die untere Führungsposition des Horizontal-Führungsabschnitts 412 auf eine Höhe begrenzt, die minimal zum Beispiel in der Höhe der mit den Förder-Führungsgliedern 5 geführten Träger-Führungselemente 33 oder darüber liegt. Die geführten Fußtragteile 3 befinden sich dann längs der Führungsstrecke f in einer nach unten begrenzten angehobenen Hängehöhe. Wie aus Fig. 1 ersichtlich, weist - wie allgemein vorgesehen - das Hebe-Führungsglied 4 eine Führungslänge I auf, die maximal nahezu gleich dem und jedenfalls kleiner als der Förderabstand A zwischen zwei aufeinanderfolgenden Träger-Führungselementen 33 bzw. Geflügelträgern 131 ist.

Die erfindungsgemäß ausgebildete und angeordnete Träger-Führungseinrichtung 132 wirkt mit der Geflügelbein-Positioniereinrichtung 70 der Geflügelbein-Hebeeinrichtung 12 in besonderer Weise zusammen. Dies wird allgemein dadurch erreicht, dass mittels der Führungs-Lagereinrichtung 42 das Hebe-Führungsglied 4 in Abhängigkeit von der Last, mit der der Geflügelträger 131 in dem zugeordneten Abschnitt der Geflügelbein-Hebestrecke h belastet bzw. entlastet wird, durch Absenken und Anheben dynamisch höhenbewegbar ist. Die Träger-Führungseinrichtung 132 ist derart eingerichtet, dass das Wechselspiel insbesondere in Abhängigkeit von durchschnittlichen Gewichten geförderter Geflügelbeine 9 und/oder von einer durchschnittlichen Beinanatomie oder -größe einstellbar und an Hebeschwankungen anpassbar ist, wie dies nachfolgend erläutert wird.

Wie zuvor erläutert, befindet sich der Fußgelenkkopf 911 eines Geflügelbeins 9 in normaler Hängehöhe der Fußeinhängeeinrichtung 31 im, wie angenommen wird, Klemmsitz in dem Trägerbügel 311, so lange sich das Fußtragteil 3 bzw. dessen Träger-Führungselement 33 außer Eingriff mit dem dynamischen Führungsglied 4 befindet. Eine solche Förderposition ist in Fig. 1 stromaufwärts dargestellt. In Fig. 1 ist dann innerhalb der Geflügelbein-Hebestrecke h eine Position dargestellt, in der das Geflügelbein 9 durch das mitlaufende Positionierelement 75 und damit der Fußgelenkkopf 911 in eine Position gehoben worden ist, auf die sich die Hängehöhe des im Eingriff mit dem Hebe-Führungsglied 4 befindlichen Fußtragteils 3 eingestellt hat. Dies geschieht durch folgenden Ablauf. Beim Auftreffen des Träger-Führungselements 33, das mittels des Förder-Führungsglieds 5 in die Träger-Hebeeinrichtung 13 geführt wird, erfolgt eine erste Gewichtsentlastung des Fußtragteils 3. Die Rückstellkraft kann mittels Verschiebung des Rückstell-/Gegengewichts 425 so eingestellt werden, dass sich das Fußtragteil 3 entlang des Anstiegs-Führungsabschnitts 411 hebt, um die Hängehöhe an den sich hebenden Fußgelenkkopf 911 anzupassen. Diese Anhebung kann zeitgleich mit einem Absenken des Hebe-Führungsglieds 4 durch Gewichtsbelastung einhergehen. Allgemein kann das Anheben in einem größeren Maß als das Absenken erfolgen. Das Hebe-Führungsglied 4 ist zum Beispiel so eingerichtet bzw. eingestellt, dass es in eine untere Führungsposition bewegbar ist, die sich bei Belastung des Hebe-Führungsglieds 4 mit gegenüber der Rückstellkraft größere Gewichtskraft einstellt. Bei weiterer Entlastung des Fußtragteils 3 hebt sich das Hebe-Führungsglied 4 an und gelangt in einen neutralen Schwebezustand, in dem die noch auf den Fußtragteil 3 wirkende Gewichtslast mit der Rückstellkraft ausgeglichen wird.

Wesentlich ist, dass das Hebe-Führungsglied 4 im Schwebezustand in einem Schwebebereich um die Lagerschwenkachse 422 hin und her kippen oder pendeln kann. Je nach Einstellung der Rückstellkraft, im Ausführungsbeispiel mittels des Gegengewichts 425, kann der Pendelzustand gezielt an einer gewünschten Stelle im Bereich der Geflügelbein-Hebestrecke h eingestellt werden, um den Schwebebereich auf den Hebebereich, in dem das Geflügelbein 9 sukzessive gehoben wird, anzupassen. Vorteilhaft kann die Rückstellkraft mittels Verlagerung des Gegengewichts 425 so eingestellt werden, dass das Hebe-Führungsglied 4 bereits in einer Träger-Einführungsposition, in der die Fußtragteile 3 in Eingriff mit dem Hebe-Führungsglied 4 gelangen, eine Schwebe-Führungsposition einnimmt. Insbesondere erfolgt dann das erste Anheben am Beginn der Geflügelbein-Hebestrecke h in Kombination mit dem relativ zur Hebe-Führungslänge kleinen Anstiegs-Führungsabschnitt 411. Prinzipiell erfolgt die Einstellung so, dass die zu Beginn des Hebens des Geflügelbeins 9 auftretende größte Belastung auf das Fußtragteil 3 im Verlauf des Hebens durch die Rückstellkraft bzw. die Gegenkraft weitgehend neutralisiert wird. Durch sukzessive Gewichtsentlastung in Folge des Hebens des Geflügelbeins 9 längs der Geflügelbein-Hebestrecke h der Geflügelbein-Hebeeinrichtung 12 schwenkt das Hebe-Führungsglied 4 nach oben, so dass jeweils das damit in Eingriff befindliche Fußtragteil 3 und damit die Fußeinhängeeinrichtung 31 mit Trägerbügel 311 sukzessiv leichtgängig in Hängehöhen gehoben wird, die mit den gehobenen Höhen des Fußgelenkkopfes 911 des Geflügelbeins 9 beim Passieren der Geflügelbein-Hebestrecke h korrespondieren. Die maximale Hebehöhe ist durch die Anschlagposition 43 begrenzt. Ein in der Fußeinhängeeinrichtung 31, im Beispiel in dem Trägerbügel 311, klemmend oder sonst wie fixiert festsitzender Fußgelenkkopf 911 weicht mit der geführten Fußeinhängeeinrichtung 31 beim Heben frei nach oben aus, so dass Betriebsstörung oder Fehlpositionierung beim Heben zuverlässig vermieden sind.

Im Ausführungsbeispiel gemäß Fig. 1 endet die Führungsstrecke f an einer Stelle, an der eine definierte gehobene Fußgelenkkopf-Position erreicht ist, wenn nämlich das lateral geförderte Geflügelbein 9 im Bereich seines Kniegelenks 93 an dem Führungs-Referenzrand zur Anlage kommt oder gekommen ist. Der Führungs-Referenzrand und anschließend der Halte- und Führungsspalt 141 übernehmen die Führung des Geflügelbeins 9 und werden mit dessen Gewicht belastet. An der definiert gehobenen Fußgelenkkopf-Position gelangt das Träger-Führungselement 33 außer Eingriff mit dem Hebe-Führungsglied 4, so dass letzteres, bevor es mit dem Fußtragteil 3 des nachfolgenden Geflügelträgers 131 in Eingriff gelangt, in eine Führungs-Ausgangsposition zurückversetzt wird, die durch die zuvor beschriebene Einstellung der Rückstellkraft mit der gewünschten Schwebeposition oder Anschlagposition bestimmt ist.

Die erfindungsgemäße Hebevorrichtung ist von besonderem Vorteil, wenn die Geflügelbein-Hebeeinrichtung 12, wie im Ausführungsbeispiel gemäß Fig. 1, die Bein-Halte- und Führungseinrichtung 14 aufweist, die das Geflügelbein 9 an der genannten definierten gehobenen Fußgelenkkopf-Position zum Halten und Führen übernimmt. Längs der Referenz-Förderstrecke r bleibt es erforderlich, dass der Fußgelenkkopf 911, der klemmend oder sonst wie fixiert in der Fußeinhängeeinrichtung 31 sitzt, durch diese Fixierung nicht behindert ist. Da der Fußgelenkkopf 911 in der Höhe der definierten gehobenen Fußgelenkkopf-Position bleibt und gegebenenfalls im Einlaufbereich des Führungs-Referenzrandes noch zusätzlich, wenn auch geringfügig, gehoben wird, ist es erforderlich, dass das Fußtragteil 3 mit der Fußeinhängeeinrichtung 31 weiterhin ungehindert nach oben bewegbar ist, um korrerspondierende Hängehöhen sicherzustellen, wobei die gehobenen Fußgelenkkopf-Positionen aufgrund anatomischer Strukturunterschiede der geförderten Geflügelbeine 9 auch schwanken können.

Die Fußtragteile 3 der Geflügelträger 131 der erfindungsgemäßen Träger-Hebeeinrichtung 13 bleiben auch nach Verlassen der Träger-Führungseinrichtung 132 zur Höhenverstellung höhenbewegbar. Die längs der Referenz-Förderstrecke r geförderten Fußgelenkköpfe 911 befinden sich bereits in gehobenen Fußgelenkkopf-Positionen, wobei die Geflügelbeine 9 im Bereich des Kniegelenks 93 gelagert und gestützt werden. Infolgedessen sind die Fußtragteile 3 jeweils von dem Gewicht des Geflügelbeins 9 vollständig befreit mit dem Effekt, dass die Fußtragteile 3 ausreichend leichtgängig höhenbewegbar an den Fußgelenkköpfen 911 festsitzen, wie dies in der linken Hälfte der Fig. 1 stromabwärts dargestellt ist.

Erst wenn die Geflügelträger 131 die Bein-Halte- und Führungseinrichtung 14 verlassen, werden sie jeweils mittels des Schiebelagers 24 nach unten bewegt, wobei sie gegen einen Anschlag gelangen, der sie in der normalen Hängehöhe zum Transport des Gelfügelbeins 9 hält. Mittels eines nur strichpunktiert dargestellten Arretierelements 23 wie ein Sperrhebel oder dergleichen kann das Fußtragteil 3 in der normalen Hängehöhe an dem Trägeraufhängeteil 2 vorzugsweise selbsttätig festgesetzt sein. Diese Trägersperre ist zu lösen, bevor der Geflügelträger 131 in Eingriff mit dem Hebe-Führungsglied 4 gelangt. Zu diesem Zweck ist die Träger-Führungseinrichtung 132 mit den Führungselementen 6 ausgestattet, die in Eingriff mit dem Arretierelement 23 gelangen, um es zu entriegeln.

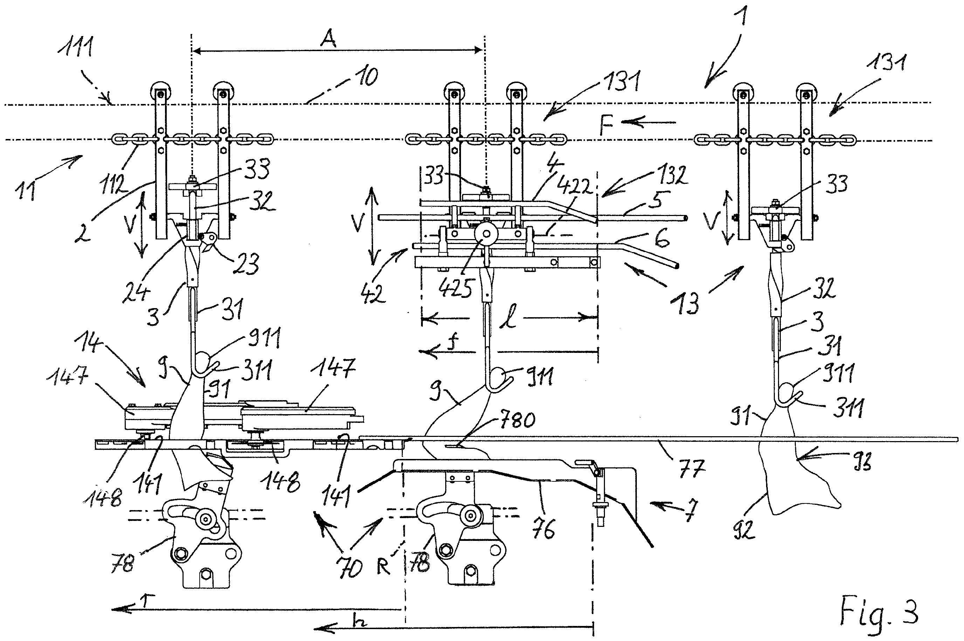

Die erfindungsgemäße Hebevorrichtung lässt sich auch zur Axialförderung von zu hebenden Geflügelbeinen einrichten. Ein Beispiel für eine solche Ausführung geht aus Fig. 3 hervor. Für gleiche oder entsprechende Einrichtungen und Elemente werden Bezugszeichen verwendet, die mit denen in Fig. 1 übereinstimmen. Insoweit wird zur Beschreibung des Ausführungsbeispiels gemäß Fig. 3 auf die Beschreibung zu Fig. 1 verwiesen.

Die Axialförderung gemäß Fig. 3 unterscheidet sich von der Lateralförderung gemäß Fig. 1 dadurch, dass die Fußeinhängeeinrichtung 31 mit dem Doppel-Trägerbügel des Geflügelträgers 131 um den Schaft 32 des Fußtragteils 3 um 90° gedreht ist. Das linke und das rechte Geflügelbein eines Geflügels werden, von dem Geflügel getrennt, mit der Beinseite, an der sich die Kniescheibe befindet, vorausgefördert. In Fig. 3 sind die Geflügelträger 131 nur mit geförderten linken Geflügelbeinen 9 dargestellt. Entsprechend ist zum Heben, Positionieren und Bearbeiten auch nur eine Geflügelbein-Hebeeinrichtung 12 mit Geflügelbein-Positioniereinrichtung 70 und Bein- Halte- und Führungseinrichtung 14 für die linken Geflügelbeine 9 dargestellt. Nicht dargestellte Einrichtungen zum Heben, Positionieren und Bearbeiten der parallel auch mit den Geflügelträgern 131 geförderten rechten Geflügelbeine sind entsprechend den Einrichtungen für die linken Geflügelbeine ausgeführt. Die Trägerführungseinrichtung 132 der Träger-Hebeeinrichtung 13 entspricht der in Fig. 2 dargestellten Träger-Führungseinrichtung 132, auf deren Beschreibung Bezug genommen wird.

Die Geflügelbeine 9, die gemäß Fig. 3 mit den Fußeinhängeeinrichtungen 31 paarweise gefördert werden, gelangen aus normaler Hängeposition, wie stromaufwärts in Fig. 3 dargestellt, in die Bein-Beugeeinrichtung 7 der Geflügelbein-Positioniereinrichtung 70, die zusammen die Geflügelbeinhebeeinrichtung 12 bilden. Die Einrichtungen 12, 70 und 7 sind zum Beugen, Heben und Positionieren der paarweise axial geförderten Geflügelbeine 9 eingerichtet. Eine solche Vorrichtung zur Axialförderung der Geflügelbeine in Paaren wird in der bereits zuvor in Bezug genommenen WO 2015/117668 A1 im Einzelnen beschrieben.

Erfindungsgemäß ist auch bei dem Ausführungsbeispiel der Axialförderung gemäß Fig. 3 die Träger-Führungseinrichtung 132 mit der Führungslänge I längs der Führungsstrecke f der Hebestrecke h der Bein-Beugeeinrichtung 7 zugeordnet. Das Beugen und Positionieren längs eines zugehörigen Abschnitts der Geflügelbein-Hebestrecke h erfolgt mittels eines stationären Positionierelements 76 mit einer in Förderrichtung F nach oben verlaufenden Rampenführung sowie mit einer Reihe von jeweils einem Geflügelbein 9 zugeordneten mitlaufenden Positionierelementen 78, die jeweils einen Positionierarm 780 aufweisen, der in die Kniekehle des mit der Beinvorderseite vorausgeförderten Geflügelbeins 9 eingreift. Ein stationäres Positionierelement 77 bildet eine lineare, gerade Streckenführung. Erfindungsgemäß wird das Heben der Geflügelbeine 9 längs des von der Führungsstrecke f abgedeckten Abschnitts der Hebestrecke h unterstützt und begünstigt, wobei die Träger-Führungseinrichtung 132 auf den Beuge- und Hebevorgang derart einstellbar ist, dass jeweils die Fußeinhängeeinrichtung 31 in spezieller Abhängigkeit von der Gewichtsentlastung des Geflügelbeins 9 beim Heben und Positionieren in Hängehöhen gelangt, die auf ein Ausweichen oder Anheben der Fußgelenkköpfe 911 beim Heben und Positionieren angepasst sind.

Der Halte- und Führungsspalt 141 der Bein-Halte- und Führungseinrichtung 14 ist derart eingerichtet, dass er jedes Geflügelbein 9 mit vorausgerichteter Kniescheibe im Bereich des Kniegelenks aufnimmt, und zwar an einer Förderstelle R, an der im Ausführungsbeispiel der Abschnitt der Geflügelbein-Hebestrecke h, der zur Bein-Beugeeinrichtung 7 gehört, endet. An dieser Stelle wird auch die Träger-Führungseinrichtung 132 am Ende der Führungsstrecke f verlassen. Damit gelangt das Geflügelbein 9 in die Referenz-Förderstrecke r, wobei der Halte- und Führungsspalt 141 Referenzränder bildet und das Geflügelbein 9 in die in Fig. 3 stromabwärts dargestellte Vertikalposition gelangt, in der der Fußgelenkkopf 911 in Folge des mit dem Halte- und Führungsspalt 141 eingehängten Geflügelbeins 9 gewichtsentlastet und weiter gehoben ist. Wie zuvor zum Ausführungsbeispiel der Lateralförderung beschrieben, sitzt dann die Fußeinhängeeinrichtung 31 auf dem Unterschenkel 91 unterhalb des Fußgelenkkopfes 911 auf bzw. der Fußgelenkkopf 911 ist an der Fußeinhängeeinrichtung 31 zum Beispiel klemmend fixiert.

Die Bein-Halte- und Führungseinrichtung 14 weist eine Schneidestation 147 mit einem Paar von längs der Förderstrecke versetzt angeordneten Schneidmitteln 148, gebildet durch Kreismesser, auf. In der Schneidestation 147 werden unterhalb des Halte- und Führungsspalts 141 Schnitte an den beiden lateralen Beinseiten des Geflügelbeins 9 in Höhe des Kniegelenks angebracht. Der Schneidestation 147 folgen weitere nicht dargestellte Bearbeitungsstationen der Bein-Halte- und Führungseinrichtung 14.

Die Erfindung ist auf die Anordnung der Träger-Führungseinrichtung 132 der Ausführungsbeispiele gemäß Fig. 1 und 3 nicht beschränkt. Insbesondere die beschriebene Träger-Führungseinrichtung 132 lässt sich zum Beispiel gezielt einer Endstrecke der Bein-Beugeeinrichtung 7 und einer Anfangsstrecke der Bein-Halte- und Führungseinrichtung 14 zuordnen. Es wird hervorgehoben, dass auch die Bein-Halte- und Führungseinrichtung 14 als solche das Geflügelbein 9 nach Einfädelung in den Halte- und Führungsspalt 141 hebt. So erfasst die Erfindung zum Beispiel auch eine Anordnung der Träger-Führungseinrichtung 132, in der sie nur der Bein-Halte- und Führungseinrichtung 14, insbesondere einer Anfangsstrecke zugeordnet ist. Es wird auch deutlich, dass sich die erfindungsgemäße Träger-Führungseinrichtung, wie zum Beispiel gemäß der anhand der Fig. 2 beschriebenen Ausführung, nach Anforderung mehrfach in Reihe längs einer Förderstrecke hintereinander anordnen lässt. Dabei können zwei benachbarte Träger-Führungseinrichtungen unmittelbar aufeinanderfolgen oder, in Abhängigkeit vom Einsatz längs der Förderstrecke, beabstandet sein. Jeweils wird die Anordnung dadurch bestimmt, dass das Hebe-Führungsglied 4 eine Führungslänge I aufweist, die maximal gleich dem Förderabstand A zwischen zwei aufeinanderfolgenden Geflügelträgern 13 ist.

## Patentansprüche

1. Hebevorrichtung (1), eingerichtet zum Heben von in Reihe hängend geförderten Geflügelbeinen (9), umfassend
- eine Fördereinrichtung (11) mit entlang eines Förderstrangs (111) in gerader Förderlinie (10) und Förderrichtung (F) bewegbaren Geflügelträgern (131), wobei jeder Geflügelträger (131) ein an dem Förderstrang (111) aufgehängtes Trägeraufhängeteil (2) und ein Fußtragteil (3) aufweist, an dem eine Fußeinhängeeinrichtung (31) ausgebildet ist, in die wenigstens ein Geflügelbein (9) mittels des Fußgelenkkopfes (911) des Geflügelbeins (9) zur hängenden Förderung einhängbar ist,
- eine Geflügelbein-Hebeeinrichtung (12), die eine Geflügelbein-Positioniereinrichtung (70) mit wenigstens einem, einer Geflügelbein-Hebestrecke (h) zugeordneten Positionierelement (71 bis 78, 141) aufweist, das außerhalb der Fußeinhängeeinrichtungen (31) unter Gewichtsentlastung des Geflügelträgers (131) derart in Eingriff mit den geförderten Geflügelbeinen (9) gelangt, dass dadurch die geförderten Geflügelbeine (9) und damit deren Fußgelenkköpfe (911) in der Geflügelbein-Hebestrecke (h) in gehobene Fußgelenkkopf-Positionen hebbar sind,
**gekennzeichnet durch**
- eine Träger-Hebeeinrichtung (13), umfassend die Geflügelträger (131) sowie eine im Bereich der Geflügelbein-Hebeeinrichtung (12) angeordnete Träger-Führungseinrichtung (132),
- wobei jeder Geflügelträger (131) das Fußtragteil (3) zur Höhenverstellung zwischen einer festen unteren Hängehöhe und darüber liegenden Hängehöhen frei höhenbewegbar an dem Trägeraufhängeteil (2) lagert und
- wobei die Träger-Führungseinrichtung (132) ein dynamisch bewegbares Hebe-Führungsglied (4), das im Bereich der Geflügelbein-Hebeeinrichtung (12) mit einer wenigstens einem Abschnitt der Geflügelbein-Hebestrecke (h) zugeordneten Führungsstrecke (f) angeordnet ist, sowie eine Führungs-Lagereinrichtung (42) aufweist, die das Hebe-Führungsglied (4) im Zusammenwirken mit der **durch** das Heben der Geflügelbeine (9) bewirkten Gewichtsentlastung der Geflügelträger (131) **durch** Absenken und Anheben dynamisch höhenbewegbar lagert, wobei das Hebe-Führungsglied (4) zum Eingriff mit dem Fußtragteil (3) angeordnet ist, derart, dass jede Fußeinhängeeinrichtung (31) entlang der Führungsstrecke (f) mittels des Fußtragteils (3) in Hängehöhen gehoben wird, die mit den in der Geflügelbein-Hebeeinrichtung (12) gehobenen Fußgelenkkopf-Positionen korrespondieren.

2. Hebevorrichtung nach Anspruch 1, **dadurch gekennzeichnet, dass** die Führungsstrecke (f) des Hebe-Führungsglieds (4) eine Führungslänge (l) aufweist, die maximal gleich dem Förderabstand (A) zwischen zwei aufeinanderfolgenden Geflügelträgern (13) ist, und an einer Förderposition des Geflügelträgers (131) endet, an der eine definierte gehobene Fußgelenkkopf-Position erreicht ist.

3. Hebevorrichtung nach Anspruch 1 oder 2, **dadurch gekennzeichnet, dass** das Hebe-Führungsglied (4) durch einen ansteigenden Anstiegs-Führungsabschnitt (411) sowie einen anschließenden Horizontal-Führungsabschnitt (412) gebildet ist, wobei der Anstiegs-Führungsabschnitt (411) im Vergleich mit dem Horizontal-Führungsabschnitt (412) eine kleine Führungslänge aufweist.

4. Hebevorrichtung nach Anspruch 2 oder 3, **dadurch gekennzeichnet, dass** die Träger-Führungseinrichtung (132) einen Höhenanschlag (43) aufweist, der eine maximale Hebehöhe des Führungsglieds (4) bestimmt.

5. Hebevorrichtung nach einem der Ansprüche 1 bis 4, **dadurch gekennzeichnet, dass** die Führungs-Lagereinrichtung (42) als Einrichtung ausgebildet ist, mit der das Hebe-Führungsglied (4) parallel zur geraden Förderlinie (10) höhenbewegbar ist.

6. Hebevorrichtung nach einem der Ansprüche 1 bis 5, **dadurch gekennzeichnet, dass** die Führungs-Lagereinrichtung (42) das Hebe-Führungsglied (4) gegen einstellbare Rückstellkraft lagert, die im Eingriff des zu hebenden Fußtragteils (3) mit dem Hebe-Führungsglied (4) einer Gewichtskraft entgegenwirkt, die das Hebe-Führungsglied (4) belastet.

7. Hebevorrichtung nach Anspruch 6, **dadurch gekennzeichnet, dass** das Hebe-Führungsglied (4) in einer Träger-Einführungsposition, in der die Fußtragteile (3) in Eingriff mit dem Hebe-Führungsglied (4) gelangen, in eine untere Führungsposition bewegbar ist, die sich bei Belastung des Hebe-Führungsglieds (4) mit gegenüber der Rückstellkraft größerer Gewichtskraft einstellt.

8. Hebevorrichtung nach Anspruch 7, **dadurch gekennzeichnet, dass** die untere Führungsposition durch einen Tiefenanschlag (44) begrenzt ist.

9. Hebevorrichtung nach Anspruch 8, **dadurch gekennzeichnet, dass** der Tiefenanschlag (44) die untere Führungsposition auf eine Höhe begrenzt, in der sich die Fußtragteile (3) jeweils in einer nach unten begrenzten angehobenen Hängehöhe befinden.

10. Hebevorrichtung nach einem der Ansprüche 6 bis 9, **dadurch gekennzeichnet, dass** das Hebe-Führungsglied (4) in einer Träger-Einführungsposition, in der die Fußtragteile (3) in Eingriff mit dem Hebe-Führungsglied (4) gelangen, in eine zu einem Schwebebereich gehörende Schwebe-Führungsposition bewegbar ist, die sich bei Belastung des Hebe-Führungsglieds (4) mit durch die Rückstellkraft ausgeglichener Gewichtskraft einstellt.

11. Hebevorrichtung nach einem der Ansprüche 1 bis 10, **dadurch gekennzeichnet, dass** das Hebe-Führungsglied (4) derart eingerichtet ist, dass es beim Eingriff der Fußtragteile (3) mit dem Hebe-Führungsglied (4) zum Herbeiführen einer gehobenen Führungsposition zeitgleich angehoben und abgesenkt wird.

12. Hebevorrichtung nach einem der Ansprüche 1 bis 11, **dadurch gekennzeichnet, dass** die Führungs-Lagereinrichtung (42) wenigstens durch eine Hebe-Schwenklagereinrichtung (421) mit einem zwei Seitenhebel (423, 424) aufweisenden, zweiseitigen Hebel gebildet ist, der um eine Lagerschwenkachse (422) schwenkbar ist, wobei der erste Seitenhebel (423) das Hebe-Führungsglied (4) trägt und der zweite Seitenhebel (424) ein Rückstellkraft bewirkendes Gegengewicht (425) trägt.

13. Hebevorrichtung nach einem der Ansprüche 1 bis 12, **dadurch gekennzeichnet, dass** an jedem Geflügelträger (131) ein steuerbares Arretierelement (23) angeordnet ist, das die Höhenverstellung zwischen dem Trägeraufhängeteil (2) und dem Fußtragteil (3) sperrt, wobei die Träger-Führungseinrichtung (132) der Hebevorrichtung (1) ein Entsperr-Steuerglied (6) aufweist, das mit dem Arretierelement (23) zur Freigabe der Höhenverstellung zwischen dem Trägeraufhängeteil (2) und dem Fußtragteil (3) an einer Förderposition in Eingriff bringbar ist, die einer Einführungsposition der Geflügelbeine (9) in die Träger-Hebeeinrichtung (13) vorausliegt.

14. Hebevorrichtung nach einem der Ansprüche 1 bis 13, **dadurch gekennzeichnet, dass** die Fußeinhängeeinrichtungen (31) von einigen Geflügelträgern (131) jeweils durch wenigstens einen Bügel (311) gebildet sind, der beim Heben der Geflügelbeine (9) ein freies Heben wenigstens einiger Fußgelenkköpfe (911) in dem Bügel (311) zulässt.

15. Hebevorrichtung nach einem der Ansprüche 1 bis 14, **dadurch gekennzeichnet, dass** die Fußeinhängeeinrichtungen (31) von wenigstens einigen Geflügelträgern (131) derart ausgebildet sind, dass wenigstens einige Fußgelenkköpfe (911) in den Fußeinhängeeinrichtungen (31) fixiert, ein Heben in den Fußeinhängeeinrichtungen (31) sperrend, zu sitzen kommen.

16. Hebevorrichtung nach einem der Ansprüche 1 bis 15, **dadurch gekennzeichnet, dass** die Fußeinhängeeinrichtung (31) zum Einhängen von zwei hintereinander oder nebeneinander zu fördernden, voneinander getrennten Geflügelbeinen (9) ausgebildet ist.

17. Hebevorrichtung nach Anspruch 16, **dadurch gekennzeichnet, dass** die Geflügelbein-Positioniereinrichtung (70) der Geflügelbein-Hebeeinrichtung (12) durch eine Bein-Beugeeinrichtung (7) mit wenigstens einem Positionierelement (71 - 78) gebildet ist, das jedes geförderte Geflügelbein (9) im Bereich des Kniegelenks (93) beugt und den Fußgelenkkopf (911) in eine gehobene Fußgelenkkopf-Position bringt.

18. Hebevorrichtung nach einem der Ansprüche 1 bis 17, **dadurch gekennzeichnet, dass** die Geflügelbein-Hebeeinrichtung (12) eine Bein-Halte- und Führungseinrichtung (14) umfasst, die mittels der Geflügelträger (131) geförderte Geflügelbeine (9) in einer Referenz-Förderstrecke (r) mit gehobenen Fußgelenkköpfen (911) hält und führt.

19. Hebevorrichtung nach Anspruch 18, **dadurch gekennzeichnet, dass** die Bein-Halte- und Führungseinrichtung (14) derart eingerichtet ist, dass sie die Fußgelenkköpfe (911) aus einer unteren Position in eine obere Position hebt.

20. Hebevorrichtung nach Anspruch 19, **dadurch gekennzeichnet, dass** die Bein-Halte- und Führungseinrichtung (14) einen Halte- und Führungsspalt (141) aufweist, in den die Geflügelbeine (9) in vertikaler Ausrichtung mittels ihrer Kniegelenke (93) einhängbar sind.

21. Hebevorrichtung nach einem der Ansprüche 18 bis 20, **dadurch gekennzeichnet, dass** die Führungsstrecke (f) des Hebe-Führungsglieds (4) an einer Förderposition der Geflügelträger (131) endet, die dem Anfang der Referenz-Förderstrecke (r) zugeordnet ist, und dass die Fußtragteile (3) entlang der Referenz-Förderstrecke (r) höhenbewegbar an den Trägeraufhängeteilen (2) gelagert sind.

22. Hebevorrichtung nach einem der Ansprüche 18 bis 20, **d a durch gekennzeichnet,** dass die Führungsstrecke des Hebe-Führungsglieds (4) wenigstens teilweise wenigstens einen Abschnitt der Referenz-Förderstrecke (r) abdeckt.

23. Hebevorrichtung nach einem der Ansprüche 1 bis 22, **dadurch gekennzeichnet, dass** das Hebe-Führungsglied (4) durch ein Paar zu einer vertikalen Fördermittenebene symmetrisch ausgebildeter und gelagerter Hebe-Führungsstangen (41) gebildet ist und das Fußtragteil (3) jedes Geflügelträgers (131) einen zum Eingriff mit dem Hebe-Führungsglied (4) auf das Paar der Hebe-Führungsstangen (41) aufsetzbares Träger-Führungselement (33) aufweist.

## Claims

1. Lifting apparatus (1), configured to lift poultry legs (9) conveyed suspended in a row, comprising
- a conveying device (11) having poultry carriers (131) which are movable along a conveying strand (111) in a straight conveying line (10) and in the direction of conveyance (F), wherein each poultry carrier (131) has a carrier suspension part (2) suspended from the conveying strand (111) and a foot carrying part (3) on which there is formed a foot hook-in device (31) in which at least one poultry leg (9) can be suspended by means of the ankle joint ball (911) of the poultry leg (9) for suspended conveying, and
- a poultry leg lifting device (12) which has a poultry leg positioning device (70) having at least one positioning element (71 to 78, 141) associated with a poultry leg lifting way (h), which positioning element, outside the foot hook-in devices (31), with weight unloading of the poultry carrier (131), comes into engagement with the conveyed poultry legs (9) in such a manner that the conveyed poultry legs (9), and thus the ankle joint balls (911) thereof, can thereby be lifted in the poultry leg lifting way (h) into lifted ankle joint ball positions,
**characterised by**
- a carrier lifting device (13) comprising the poultry carriers (131) and a carrier guiding device (132) arranged in the region of the poultry leg lifting device (12),
- wherein each poultry carrier (131) carries the foot carrying part (3) on the carrier suspension part (2) in a freely vertically movable manner for vertical adjustment between a fixed lower suspension height and suspension heights lying above that lower suspension height, and
- wherein the carrier guiding device (132) has a dynamically movable lifting guiding member (4), which is arranged in the region of the poultry leg lifting device (12) with a guiding way (f) associated with at least a portion of the poultry leg lifting way (h), and a guiding bearing device (42) which carries the lifting guiding member (4), in conjunction with the weight unloading of the poultry carriers (131) effected by the lifting of the poultry legs (9), in a dynamically vertically movable manner by lowering and lifting, wherein the lifting guide member (4) is arranged for engagement with the foot carrying part (3), in such a manner that each foot hook-in device (31) is lifted along the guiding way (f) by means of the foot carrying part (3) to suspension heights which correspond with the ankle joint ball positions lifted in the poultry leg lifting device (12).

2. Lifting apparatus according to claim 1, **characterized in that** the guiding way (f) of the lifting guiding member (4) has a guiding length (I) which, at most, is equal to the conveying distance (A) between two successive poultry carriers (13) and ends at a conveying position of the poultry carrier (131) at which a defined lifted ankle joint ball position is reached.

3. Lifting apparatus according to claim 1 or 2, **characterized in that** the lifting guiding member (4) is formed by an ascending rising guiding portion (411) and a following horizontal guiding portion (412), wherein the rising guiding portion (411) has, in comparison with the horizontal guiding portion (412), a small guiding length.

4. Lifting apparatus according to claim 2 or 3, **characterized in that** the carrier guiding device (132) has a height stop (43) which determines a maximum lifting height of the guiding member (4).

5. Lifting apparatus according to any one of claims 1 to 4, **characterized in that** the guiding bearing device (42) is in the form of a device with which the lifting guiding member (4) is vertically movable parallel to the straight conveying line (10).

6. Lifting apparatus according to any one of claims 1 to 5, **characterized in that** the guiding bearing device (42) carries the lifting guiding member (4) against adjustable restoring force which, when the foot carrying part (3) to be lifted engages with the lifting guiding member (4), counteracts a weight force which loads the lifting guiding member (4).

7. Lifting apparatus according to claim 6, **characterized in that** the lifting guiding member (4), in a carrier insertion position, in which the foot carrying parts (3) come into engagement with the lifting guiding member (4), is movable into a lower guiding position which is established when the lifting guiding member (4) is loaded with a weight force greater than the restoring force.

8. Lifting apparatus according to claim 7, **characterized in that** the lower guiding position is limited by a depth stop (44).

9. Lifting apparatus according to claim 8, **characterized in that** the depth stop (44) limits the lower guiding position to a height at which the foot carrying parts (3) are each situated at a lifted suspension height that is limited downwards.

10. Lifting apparatus according to any one of claims 6 to 9, **characterized in that** the lifting guiding member (4), in a carrier insertion position, in which the foot carrying parts (3) come into engagement with the lifting guiding member (4), is movable into a floating guiding position belonging to a floating region which is established when the lifting guiding member (4) is loaded with a weight force that is balanced by the restoring force.

11. Lifting apparatus according to any one of claims 1 to 10, **characterized in that** the lifting guiding member (4) is so configured that, when the foot carrying parts (3) engage with the lifting guiding member (4), it is simultaneously lifted and lowered in order to bring about a lifted guiding position.

12. Lifting apparatus according to any one of claims 1 to 11, **characterized in that** the guiding bearing device (42) is formed at least by a lifting pivot bearing device (421) having a two-sided lever which has two lateral levers (423, 424) and is pivotable about a bearing pivot axis (422), wherein the first lateral lever (423) carries the lifting guiding member (4) and the second lateral lever (424) carries a counter weight (425) providing a restoring force.

13. Lifting apparatus according to any one of claims 1 to 12, **characterized in that** there is arranged on each poultry carrier (131) a controllable arresting element (23) which blocks the vertical adjustment between the carrier suspension part (2) and the foot carrying part (3), wherein the carrier guiding device (132) of the lifting apparatus (1) has an unlocking control member (6) which, at a conveying position which is in advance of an insertion position of the poultry legs (9) into the carrier lifting device (13), can be brought into engagement with the arresting element (23) in order to enable the vertical adjustment between the carrier suspension part (2) and the foot carrying part (3).

14. Lifting apparatus according to any one of claims 1 to 13, **characterized in that** the foot hook-in devices (31) of some poultry carriers (131) are each formed by at least one hanger (311) which allows at least some ankle joint balls (911) to be lifted freely in the hanger (311) when the poultry legs (9) are lifted.

15. Lifting apparatus according to any one of claims 1 to 14, **characterized in that** the foot hook-in devices (31) of at least some poultry carriers (131) are so designed that at least some ankle joint balls (911) come to be fixed in the foot hook-in devices (31), blocking lifting in the foot hook-in devices (31).

16. Lifting apparatus according to any one of claims 1 to 15, **characterized in that** the foot hook-in device (31) is designed for the suspension of two poultry legs (9) which are separate from one another and are to be conveyed one behind the other or side by side.

17. Lifting apparatus according to claim 16, **characterized in that** the poultry leg positioning device (70) of the poultry leg lifting device (12) is formed by a leg bending device (7) having at least one positioning element (71-78) which bends each conveyed poultry leg (9) in the region of the knee joint (93) and brings the ankle joint ball (911) into a lifted ankle joint ball position.

18. Lifting apparatus according to any one of claims 1 to 17, **characterized in that** the poultry leg lifting device (12) comprises a leg holding and guiding device (14) which holds and guides poultry legs (9) conveyed by means of the poultry carriers (131) in a reference conveying way (r) with lifted ankle joint balls (911).

19. Lifting apparatus according to claim 18, **characterized in that** the leg holding and guiding device (14) is so configured that it lifts the ankle joint balls (911) from a lower position into an upper position.

20. Lifting apparatus according to claim 19, **characterized in that** the leg holding and guiding device (14) has a holding and guiding gap (141) in which the poultry legs (9) can be suspended in a vertical orientation by means of their knee joints (93).

21. Lifting apparatus according to any one of claims 18 to 20, **characterized in that** the guiding way (f) of the lifting guiding member (4) ends at a conveying position of the poultry carriers (131) which is associated with the start of the reference conveying way (r), and **in that** the foot carrying parts (3) are mounted on the carrier suspension parts (2) in such a manner that they are vertically movable along the reference conveying way (r).

22. Lifting apparatus according to any one of claims 18 to 20, **characterized in that** the guiding way of the lifting guiding member (4) at least in part covers at least a portion of the reference conveying way (r).

23. Lifting apparatus according to any one of claims 1 to 22, **characterized in that** the lifting guiding member (4) is formed by a pair of lifting guiding rods (41) which are formed and mounted symmetrically with respect to a vertical conveying midplane, and the foot carrying part (3) of each poultry carrier (131) has a carrier guiding element (33) which can be attached to the pair of lifting guiding rods (41) for engagement with the lifting guiding member (4).

## Revendications

1. Appareil de levage (1), configuré pour lever des pattes de volaille (9) convoyées en ligne suspendues, comprenant :
- un dispositif de convoyage (11) avec des supports à volaille (131) déplaçables le long d'une branche de convoyage (111) dans une ligne de convoyage rectiligne (10) et une direction de convoyage (F), dans lequel chaque support à volaille (131) présente une partie de suspension de support (2) suspendue au niveau de la branche de convoyage (111) et une partie de support de pied (3) sur laquelle est conçu un dispositif d'accrochage de pied (31) dans lequel au moins une patte de volaille (9) peut être accrochée par la tête de cheville (911) de la patte de volaille (9) pour un convoyage suspendu,
- un dispositif de levage de patte de volaille (12) qui présente un dispositif de positionnement de patte de volaille (70) avec au moins un élément de positionnement (71 à 78, 141) associé à un trajet de levage (h) de patte de volaille, lequel élément de positionnement, à l'extérieur des dispositifs d'accrochage de pied (31), avec un délestage du support à volaille (131), vient en engagement avec les pattes de volaille (9) convoyées, de telle façon que les pattes de volaille (9) convoyées, et donc les têtes de cheville (911) de celles-ci, peuvent ainsi être levées dans le trajet de levage (h) de patte de volaille jusque dans des positions de tête de cheville levées,
**caractérisé par**
- un dispositif de levage de supports (13), comprenant les supports à volaille (131) et un dispositif de guidage de supports (132) agencé dans la zone du dispositif de levage de patte de volaille (12),
- dans lequel chaque support à volaille (131) supporte la partie de support de pied (3) sur la partie de suspension de support (2) d'une manière librement déplaçable verticalement pour un ajustage vertical entre une hauteur de suspension inférieure fixe et des hauteurs de suspension se trouvant au-dessus, et
- dans lequel le dispositif de guidage de supports (132) présente un organe de guidage de levage (4) déplaçable dynamiquement, qui est agencé dans la zone du dispositif de levage de patte de volaille (12) avec un trajet de guidage (f) associé à au moins une section du trajet de levage (h) de patte de poulet, et un dispositif de palier de guidage (42) qui supporte l'organe de guidage de levage (4), en conjonction avec le délestage des supports à volaille (131) provoqué par le levage des pattes de volaille (9), d'une manière dynamiquement déplaçable verticalement par abaissement et relevage, dans lequel l'organe de guidage de levage (4) est agencé pour s'engager avec la partie de support de pied (3), de telle façon que chaque dispositif d'accrochage de pied (31) est levé le long du trajet de guidage (f) au moyen de la partie de support de pied (3) à des hauteurs de suspension qui correspondent aux positions de têtes de cheville levées dans le dispositif de levage de pattes de volaille (12).

2. Appareil de levage selon la revendication 1, **caractérisé en ce que** le trajet de guidage (f) de l'organe de guidage de levage (4) présente une longueur de guidage (I) qui est au maximum égale à la distance de convoyage (A) entre deux supports à volaille successifs (13), et qui se termine à une position de convoyage du support à volaille (131) à laquelle une position de tête de cheville levée définie est atteinte.

3. Appareil de levage selon la revendication 1 ou 2, **caractérisé en ce que** l'organe de guidage de levage (4) est formé par une section de guidage de montée (411) ascendante et une section de guidage horizontale suivante (412), dans lequel la section de guidage de montée (411) présente, par rapport à la section de guidage horizontale (412), une longueur de guidage petite.

4. Appareil de levage selon la revendication 2 ou 3, **caractérisé en ce que** le dispositif de guidage de supports (132) présente une butée de hauteur (43) qui détermine une hauteur de levage maximum de l'organe de guidage (4).

5. Appareil de levage selon l'une quelconque des revendications 1 à 4, **caractérisé en ce que** le dispositif de palier de guidage (42) est conçu comme un dispositif permettant de déplacer verticalement l'organe de guidage de levage (4) parallèlement à la ligne de convoyage rectiligne (10).

6. Appareil de levage selon l'une quelconque des revendications 1 à 5, **caractérisé en ce que** le dispositif de palier de guidage (42) porte l'organe de guidage de levage (4) contre une force de rappel ajustable qui, quand la partie de support de pied (3) devant être levée s'engage avec l'organe de guidage de levage (4), s'oppose à une force de poids qui charge l'organe de guidage de levage (4).

7. Appareil de levage selon la revendication 6, **caractérisé en ce que** l'organe de guidage de levage (4), dans une position d'introduction de support, dans laquelle les parties de support de pied (3) viennent en engagement avec l'organe de guidage de levage (4), est déplaçable dans une position de guidage inférieure qui est établie quand l'organe de guidage de levage (4) est chargé avec une force de poids plus grande par rapport à la force de rappel.

8. Appareil de levage selon la revendication 7, **caractérisé en ce que** la position de guidage inférieure est limitée par une butée de profondeur (44).

9. Appareil de levage selon la revendication 8, **caractérisé en ce que** la butée de profondeur (44) limite la position de guidage inférieure à une hauteur à laquelle les parties de support de pied (3) se trouvent chacune à une hauteur de suspension relevée qui est limitée vers le bas.

10. Appareil de levage selon l'une quelconque des revendications 6 à 9, **caractérisé en ce que** l'organe de guidage de levage (4), dans une position d'introduction de support, dans laquelle les parties de support de pied (3) viennent en engagement avec l'organe de guidage de levage (4), est déplaçable dans une position de guidage de flottement appartenant à une zone de flottement qui est établie quand l'organe de guidage de levage (4) est chargé avec une force de poids qui est équilibrée par la force de rappel.

11. Appareil de levage selon l'une quelconque des revendications 1 à 10, **caractérisé en ce que** l'organe de guidage de levage (4) est configuré de telle façon que, quand les parties de support de pied (3) s'engagent avec l'organe de guidage de levage (4), il est simultanément relevé et abaissé afin d'entraîner une position de guidage levée.

12. Appareil de levage selon l'une quelconque des revendications 1 à 11, **caractérisé en ce que** le dispositif de palier de guidage (42) est formé au moins par un dispositif de palier pivotant de levage (421) avec un levier à deux côtés présentant deux leviers latéraux (423, 424), qui peut être pivoté autour d'un axe de pivotement de palier (422), dans lequel le premier levier latéral (423) porte l'organe de guidage de levage (4) et le second levier latéral (424) porte un contrepoids (425) provoquant une force de rappel.

13. Appareil de levage selon l'une quelconque des revendications 1 à 12, **caractérisé en ce que**, au niveau de chaque support à volaille (131), un élément de blocage commandable (23) est agencé qui bloque l'ajustage vertical entre la partie de suspension de support (2) et la partie de support de pied (3), dans lequel le dispositif de guidage de supports (132) de l'appareil de levage (1) présente un organe de commande de déverrouillage (6) qui, à une position de convoyage qui est en amont d'une position d'introduction des pattes de volaille (9) dans le dispositif de levage de support (13), peut être amené en engagement avec l'élément de blocage (23) afin de permettre l'ajustage vertical entre la partie de suspension de support (2) et la partie de support de pied (3).

14. Appareil de levage selon l'une quelconque des revendications 1 à 13, **caractérisé en ce que** les dispositifs d'accrochage de pied (31) de certains supports à volaille (131) sont formés chacun par au moins un étrier (311) qui permet à au moins certaines têtes de cheville (911) d'être levées librement dans l'étrier (311) quand les pattes de volaille (9) sont levées.

15. Appareil de levage selon l'une quelconque des revendications 1 à 14, **caractérisé en ce que** les dispositifs d'accrochage de pied (31) d'au moins certains supports à volaille (131) sont conçus de telle façon qu'au moins certaines têtes de cheville (911) viennent à être fixées dans les dispositifs d'accrochage de pied (31), bloquant un levage dans les dispositifs d'accrochage de pied (31).

16. Appareil de levage selon l'une quelconque des revendications 1 à 15, **caractérisé en ce que** le dispositif d'accrochage de pied (31) est conçu pour accrocher deux pattes de volaille (9) distinctes l'une de l'autre, qui doivent être convoyées l'une derrière l'autre ou l'une à côté de l'autre.

17. Appareil de levage selon la revendication 16, **caractérisé en ce que** le dispositif de positionnement de pattes de volaille (70) du dispositif de levage de pattes de volaille (12) est formé par un dispositif de fléchissement de pattes (7) avec au moins un élément de positionnement (71-78) qui fléchit chaque patte de volaille (9) convoyée dans la zone de l'articulation du genou (93) et qui amène la tête de cheville (911) dans une position de tête de cheville levée.

18. Appareil de levage selon l'une quelconque des revendications 1 à 17, **caractérisé en ce que** le dispositif de levage de pattes de volaille (12) comprend un dispositif de maintien et de guidage de pattes (14) qui maintient et guide les pattes de volaille (9) convoyées au moyen des supports à volaille (131) dans un trajet de convoyage de référence (r) avec des têtes de cheville (911) levées.

19. Appareil de levage selon la revendication 18, **caractérisé en ce que** le dispositif de maintien et de guidage (14) est configuré de telle façon qu'il lève les têtes de chevilles (911) depuis une position inférieure jusque dans une position supérieure.

20. Appareil de levage selon la revendication 19, **caractérisé en ce que** le dispositif de maintien et de guidage de pattes (14) présente une fente de maintien et de guidage (141) dans laquelle les pattes de volaille (9) peuvent être accrochées dans une orientation verticale par leurs articulations du genou (93).

21. Appareil de levage selon l'une quelconque des revendications 18 à 20, **caractérisé en ce que** le trajet de guidage (f) de l'organe de guidage et de levage (4) se termine à une position de convoyage des supports à volaille (131) qui est associée au début du trajet de convoyage de référence (r), et **en ce que** les parties de support de pied (3) sont montées sur les parties de suspension de supports (2) de telle manière qu'elles peuvent se déplacer verticalement le long du trajet de convoyage de référence (r).

22. Appareil de levage selon l'une quelconque des revendications 18 à 20, **caractérisé en ce que** le trajet de guidage de l'organe de guidage et de levage (4) recouvre au moins en partie au moins une section du trajet de convoyage de référence (r).

23. Appareil de levage selon l'une quelconque des revendications 1 à 22, **caractérisé en ce que** l'organe de guidage et de levage (4) est formé par une paire de barres de guidage de levage (41) qui sont conçues et montées de manière symétrique par rapport à un plan médian de convoyage vertical, et la partie de support de pied (3) de chaque support à volaille (131) présente un élément d'introduction de support (33) qui peut être attaché à la paire de barres de guidage de levage (41) pour un engagement avec l'organe de guidage de levage (4).
